# EUROPÄISCHE PATENTANMELDUNG

(11) **EP 1 496 725 A2**
(43) Veröffentlichungstag der Anmeldung: **12.01.2005**
(21) Anmeldenummer: 04013155.9
(22) Anmeldetag: 03.06.2004
(51) Int. Cl.: H05B 41/04, H05B 41/288, H05B 41/38

(54) **Zündvorrichtung mit einem piezoelektrischen Transformator für eine Hochdruckentladungslampe**

(30) Priorität: 10.07.2003 DE 10331435
(71) Anmelder: Patent-Treuhand-Gesellschaft für elektrische Glühlampen mbH, 81543 München (DE)
(72) Erfinder: Rupp, Arnulf, 82024 Taufkirchen (DE); Sowa, Wolfram, Dr., 81739 München (DE)

(57) **Zusammenfassung**

Die Erfindung betrifft eine Zündvorrichtung für eine Hochdruckentladungslampe mit einem piezoelektrischen Transformator (3) zur Erzeugung der für die Zündung der Gasentladung in der Hochdruckentladungslampe (1) erforderlichen Zündspannung.

## Beschreibung

Die Erfindung betrifft eine Zündvorrichtung für eine Hochdruckentladungslampe und ein Beleuchtungssystem mit einer Hochdruckentladungslampe sowie einer Betriebsschaltung und Zündvorrichtung für die Hochdruckentladungslampe.

### I. Stand der Technik

Die Offenlegungsschrift WO 00/59270 A1 beschreibt eine Zünd- und Betriebsschaltung für eine Hochdruckentladungslampe, die mit einem piezoelektrischen Transformator ausgestattet ist. Die zum Zünden der Gasentladung in der Hochdruckentladungslampe erforderliche Zündspannung wird mit Hilfe eines Spannungsvervielfachers generiert, der die Ausgangsspannung auf der Sekundärseite des piezoelektrischen Transformators entsprechend verstärkt.

### II. Darstellung der Erfindung

Es ist die Aufgabe der Erfindung, eine verbesserte Zündvorrichtung für eine Hochdruckentladungslampe bereitzustellen.

Diese Aufgabe wird erfindungsgemäß durch die Merkmale des Anspruchs 1 gelöst. Besonders vorteilhafte Ausführungen der Erfindung sind in den abhängigen Ansprüchen beschrieben.

Die erfindungsgemäße Zündvorrichtung weist zur Erzeugung der für die Zündung der Gasentladung in der Hochdruckentladungslampe erforderlichen Zündspannung einen piezoelektrischen Transformator. Das heißt, dass der piezoelektrische Transformator erfindungsgemäß als Zündtransformator ausgebildet ist, der auf seiner Sekundärseite eine zum Zünden der Gasentladung ausreichende Spannung erzeugt, wenn er primärseitig mit einer Versorgungsspannung gespeist wird, deren Frequenz auf eine Resonanzfrequenz des piezoelektrischen Transformators abgestimmt ist.

Der piezoelektrische Transformator der erfindungsgemäßen Zündvorrichtung ist vorteilhaft derart ausgebildet, dass er einen Eingangsbereich mit ersten Anschlüssen zu seiner Spannungsversorgung und einen Ausgangsbereich mit zweiten elektrischen Anschlüssen zur Bereitstellung der Zündspannung für die Hochdruckentladungslampe besitzt. Der Eingangsbereich oder / und der Ausgangsbereich des piezoelektrischer Transformators weisen vorteilhaft invers zueinander polarisierbare Sektionen auf, um eine möglichst großen Übersetzungsverhältnis zu gewährleisten. Als Übersetzungsverhältnis des piezoelektrischen Transformators wird das Verhältnis von Ausgangsspannung zur Eingangsspannung des piezoelektrischen Transformators bezeichnet. Gemäß eines bevorzugten Ausführungsbeispiels der Erfindung weist die Zündvorrichtung einen Schwingkreis auf, dessen Spannungsausgang mit den ersten Anschlüssen des piezoelektrischen Transformators verbunden ist und dessen Resonanzfrequenz auf die Resonanzfrequenz des piezoelektrischen Transformators abgestimmt ist, um eine optimale Anregung der Resonanzschwingung des piezoelektrischen Transformators nur während der Zündphase der Lampe zu gewährleisten.

Das erfindungsgemäße Beleuchtungssystem umfasst eine Hochdruckentladungslampe, eine Betriebsschaltung und eine Zündvorrichtung für die Hochdruckentladungslampe. Erfindungsgemäß weist die Zündvorrichtung einen piezoelektrischen Transformator zur Erzeugung der für die Zündung der Gasentladung in der Hochdruckentladungslampe erforderlichen Zündspannung auf. Der piezoelektrische Transformator ist, wie bereits oben erläutert wurde, als Zündtransformator ausgebildet, der unmittelbar die Zündspannung für die Hochdruckentladungslampe generiert.

Der piezoelektrische Transformator des erfindungsgemäßen Beleuchtungssystems weist einen Eingangsbereich auf, der mit ersten elektrischen Anschlüssen zur Spannungsversorgung des piezoelektrischen Transformators versehen ist, und einen Ausgangsbereich auf, der mit zweiten elektrischen Anschlüssen ausgestattet ist, wobei mindestens ein zweiter elektrischer Anschluß mit einer Elektrode der Hochdruckentladungslampe verbunden ist, um die Zündspannung für die Hochdruckentladungslampe bereitzustellen. Vorzugsweise handelt es sich bei der Elektrode um eine Zündhilfselektrode der Hochdruckentladungslampe, die die Zündenergie kapazitiv in das Entladungsmedium einkoppelt. Dadurch wird der piezoelektrische Transformators ausgangsseitig nicht belastet und somit ein hohes Übersetzungsverhältnis ermöglicht. Gemäß eines bevorzugten Ausführungsbeispiels der Erfindung ist das Beleuchtungssystem mit einem Schwingkreis ausgestattet, dessen Spannungseingang mit dem Spannungsausgang der Betriebsschaltung verbunden ist und dessen Spannungsausgang mit den ersten Anschlüssen verbunden ist, wobei die Resonanzfrequenz des Schwingkreises auf eine Resonanzfrequenz des piezoelektrischen Transformators abgestimmt ist. Dadurch kann während der Zündphase der Hochdruckentladungslampe eine optimale Anregung der Resonanzschwingung des piezoelektrischen Transformators erzielt werden und ferner gewährleistet werden, dass die Resonanzschwingung des piezoelektrischen Transformators nicht mehr angeregt wird, wenn die Lampe nach ihrer Zündung mit einer Spannung anderer Frequenz, die einen genügenden Abstand zur Resonanzfrequenz des piezoelektrischen Transformators besitzt, betrieben wird.

### III. Beschreibung der bevorzugten Ausführungsbeispiele

Nachstehend wird die Erfindung anhand zweier bevorzugter Ausführungsbeispiele näher erläutert. Es zeigen:
- Figur 1: Eine schematische Darstellung des Beleuchtungssystems gemäß des ersten Ausführungsbeispiels der Erfindung
- Figur 2: Eine schematische Darstellung des Beleuchtungssystems gemäß des zweiten Ausführungsbeispiels der Erfindung

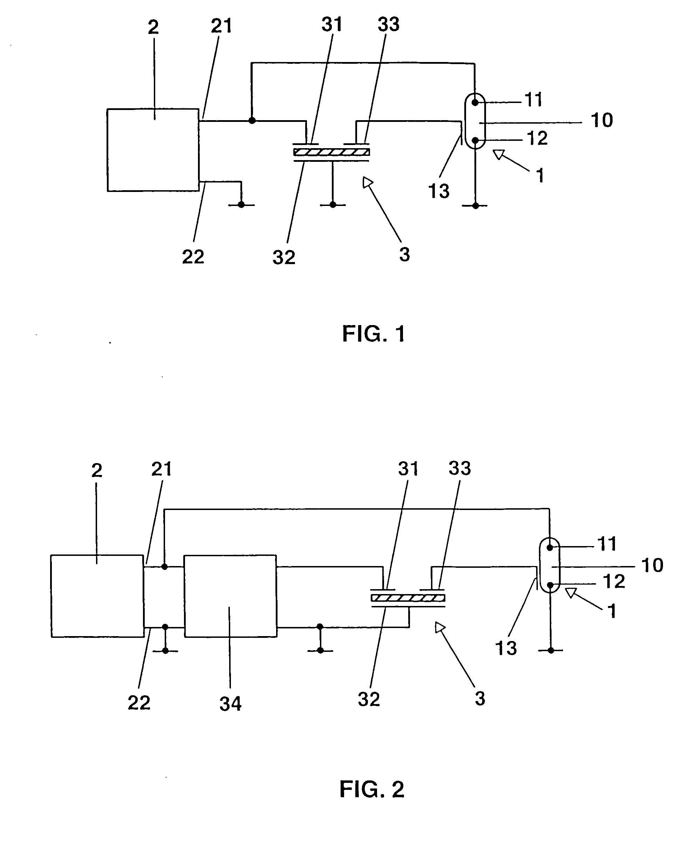

Bei dem in Figur 1 schematisch abgebildeten Beleuchtungssystem gemäß des ersten Ausführungsbeispiels handelt es sich um einen Kraftfahrzeugscheinwerfer, der eine Metallhalogenid-Hochdruckentladungslampe 1, eine Betriebsschaltung 2 und eine Zündvorrichtung 3 für die Metallhalogenid- Hochdruckentladungslampe 1 umfasst. Diese Lampe 1 dient als Lichtquelle des Kraftfahrzeugscheinwerfers, beispielsweise zur Erzeugung des Abblendlichts oder / und des Fernlichts. Die Metallhalogenid-Hochdruckentladungslampe 1 besitzt zwei Elektroden 11, 12 zwischen denen sich während des Lampenbetriebs im Entladungsmedium 10 eine Gasentladung ausbildet.

Außerdem weist die Metallhalogenid-Hochdruckentladungslampe 1 eine Zündhilfselektrode 13 auf, die beispielsweise als elektrisch leitende Beschichtung auf dem Lampengefäß ausgebildet ist und eine kapazitive Einkopplung der Zündspannung in das Entladungsmedium 10 ermöglicht. Die Betriebsschaltung 2 dient zur Spannungsversorgung der Metallhalogenid-Hochdruckentladungslampe 1 nach erfolgter Zündung der Gasentladung in dem Entladungsmedium 10. Die Betriebsschaltung 2 ist im wesentlichen als Spannungswandler ausgebildet, der die Bordnetzspannung des Kraftfahrzeugs von beispielsweise 12 Volt oder 24 Volt Gleichspannung in die hochfrequente Brennspannung der Metallhalogenid-Hochdruckentladungslampe 1 im Spannungsbereich von ca. 40 Volt bis 200 Volt und im Frequenzbereich von ca. 0,1 MHz bis 1 MHz transformiert. Der Spannungswandler kann beispielsweise einen Push-Pull-Wechselrichter, einen Vollbrücken-Wechselrichter oder einen Halbbrücken-Wechselrichter umfassen. Ein erster Ausgangsanschluß 21 der Betriebsschaltung ist mit der ersten Elektrode 11 der Metallhalogenid-Hochdruckentladungslampe 1 verbunden, um diese mit der hochfrequenten Brennspannung der Lampe 1 zu beaufschlagen. Der zweite Ausgangsschluß 22 der Betriebsschaltung 2 ist mit dem Massepotential verbunden. Ebenso ist auch die zweite Elektrode 12 der Metallhalogenid- Hochdruckentladungslampe 1 mit dem Massepotential verbunden. Die Zündvorrichtung 3 besteht aus einem piezoelektrischen Transformator, der die zum Zünden der Gasentladung in dem Entladungsmedium 10 erforderliche Zündspannung von bis zu 30 Kilovolt generiert. Zu diesem Zweck weist der piezoelektrische Transformator 3 einen Eingangsbereich mit ersten elektrischen Anschlüssen 31, 32 zu seiner Spannungsversorgung und einen Ausgangsbereich mit zweiten elektrischen Anschlüssen 32, 33, an denen die Ausgangsspannung des piezoelektrischen Transformators 3 bereitgestellt wird, auf. Der elektrische Anschluß 32, der sowohl dem Eingangs- als auch dem Ausgangsbereich des piezoelektrischen Transformators 3 zugeordnet ist, liegt auf Massepotential. Der erste elektrische Anschluß 31 ist an den hochfrequenten Spannungsausgang 21 der Betriebsschaltung 2 angeschlossen, während der zweite elektrische Anschluß 33 des piezoelektrischen Transformators 3 mit der Zündhilfselektrode 13 der Metallhalogenid-Hochdruckentladungslampe 1 verbunden ist. Der Eingangsbereich und der Ausgangsbereich des piezoelektrischen Transformators 3 besitzen mehrere benachbarte, invers zueinander polarisierbare Sektionen, so dass ein mehrere Zehnerpotenzen umfassendes Übersetzungsverhältnis des Transformators 3 möglich ist. Ein derartige piezoelektrischer Transformator 3 ist beispielsweise in der Offenlegungsschrift DE 101 09 994 A1 beschrieben. Die anregbaren Resonanzfrequenzen des piezoelektrischen Transformators 3 hängen von seinen Abmessungen und seiner Gestalt ab. Sie liegen im Frequenzbereich von ca. 0,1 MHz bis 1 MHz.

Während der Zündphase der Metallhalogenid-Hochdruckentladungslampe 1 werden die elektrischen Anschlüsse 31, 32 des Eingangsbereichs des piezoelektrischen Transformators 3 von der Betriebsschaltung 2 mit einer hochfrequenten Spannung gespeist, deren Frequenz auf eine Resonanzfrequenz des piezoelektrischen Transformators 3 abgestimmt ist. Dadurch wird ausgangsseitig an den elektrischen Anschlüssen 32, 33 des piezoelektrischen Transformators 3 die zum Zünden der Gasentladung in dem Entladungsmedium 10 der Lampe 1 erforderliche Zündspannung von bis zu 30 Kilovolt bereitgestellt. Diese Zündspannung wird der Zündhilfselektrode 13 der Lampe 1 zugeführt und kapazitiv in das Entladungsmedium 10 eingekoppelt. Nach erfolgter Zündung der Gasentladung in dem Entladungsmedium werden die Lampe 1 und die Zündvorrichtung 3 von der Betriebsschaltung 2 mit einer hochfrequenten Spannung versorgt, deren Frequenz einen genügenden Abstand zu den Resonanzfrequenzen des piezoelektrischen Transformators 3 besitzt, so dass dieser während des Brennbetriebs der Lampe 1 nicht mehr angeregt wird.

Das in Figur 2 abgebildete zweite Ausführungsbeispiel des erfindungsgemäßen Beleuchtungssystems unterscheidet sich von dem oben beschriebenen ersten Ausführungsbeispiel nur durch einen zusätzlichen Schwingkreis 34, der als Bestandteil der Zündvorrichtung ausgebildet und dem piezoelektrischen Transformator 3 vorgeschaltet ist. In allen anderen Details stimmen das erste und zweite Ausführungsbeispiel überein. Daher wurden für identische Teile der beiden Ausführungsbeispiele in den Figuren 1 und 2 auch dieselben Bezugszeichen verwendet. Die ersten elektrischen Anschlüsse 31, 32 des Eingangsbereichs des piezoelektrischen Transformators 3 sind über den Schwingkreis 34 mit den Ausgangsanschlüssen 21, 22 der Betriebsschaltung verbunden. Der Schwingkreis 34 besteht im wesentlichen aus induktiven und kapazitiven Bauelementen. Seine Resonanzfrequenz ist auf eine Resonanzfrequenz des piezoelektrischen Transformators 3 abgestimmt. Der Schwingkreis 34 gewährleistet, dass der piezoelektrische Transformator 3 während des Brennbetriebes der Metallhalogenid-Hochdruckentladungslampe 1, das heißt, nach erfolgter Zündung der Gasentladung in dem Entladungsmedium 10 der Lampe 1, nicht angeregt wird, wenn die Betriebsschaltung 2 an ihren Anschlüssen 21, 22 eine hochfrequente, nichtsinusförmige Betriebsspannung bereitstellt, deren Frequenz nicht mit der Resonanzfrequenz des piezoelektrischen Transformators 3 übereinstimmt. Nur während der Zündphase der Lampe 1, während der die Betriebsschaltung an den Ausgangsanschlüssen 21, 22 eine auf die Resonanzfrequenz des piezoelektrischen Transformators 3 und des Schwingkreises 34 abgestimmte hochfrequente Spannung bereitstellt, wird von dem piezoelektrischen Transformator 3 an seinen Anschlüssen 32, 33 die Zündspannung für die Lampe 1 erzeugt.

## Patentansprüche

1. Zündvorrichtung für eine Hochdruckentladungslampe, **dadurch gekennzeichnet, dass** die Zündvorrichtung einen piezoelektrischen Transformator (3) zur Erzeugung der für die Zündung der Gasentladung in der Hochdruckentladungslampe (1) erforderlichen Zündspannung aufweist.

2. Zündvorrichtung nach Anspruch 1, **dadurch gekennzeichnet, dass** der piezoelektrische Transformator (1) einen Eingangsbereich mit ersten Anschlüssen (31, 32) zur Spannungsversorgung des piezoelektrischen Transformators (3) und einen Ausgangsbereich mit zweiten elektrischen Anschlüssen (32, 33) zur Bereitstellung der Zündspannung für die Hochdruckentladungslampe (1) besitzt.

3. Zündvorrichtung nach Anspruch 2, **dadurch gekennzeichnet, dass** die Zündvorrichtung einen Schwingkreis (34) aufweist, dessen Spannungsausgang mit den ersten Anschlüssen (31, 32) verbunden ist und dessen Resonanzfrequenz auf eine Resonanzfrequenz des piezoelektrischen Transformators (3) abgestimmt ist.

4. Zündvorrichtung nach Anspruch 2, **dadurch gekennzeichnet, dass** der Eingangsbereich oder / und der Ausgangsbereich des piezoelektrischen Transformators (3) mehrere benachbarte, invers zueinander polarisierbare Sektionen aufweist.

5. Beleuchtungssystem mit einer Hochdruckentladungslampe (1), einer Betriebsschaltung (2) und einer Zündvorrichtung für die Hochdruckentladungslampe (1), **dadurch gekennzeichnet, dass** die Zündvorrichtung einen piezoelektrischen Transformator (3) zur Erzeugung der für die Zündung der Gasentladung in der Hochdruckentladungslampe (1) erforderlichen Zündspannung aufweist.

6. Beleuchtungssystem nach Anspruch 5, **dadurch gekennzeichnet, dass** der piezoelektrische Transformator (3) einen Eingangsbereich mit ersten Anschlüssen (31, 32), die zur Spannungsversorgung des piezoelektrischen Transformators (3) dienen, und einen Ausgangsbereich mit zweiten elektrischen Anschlüssen (32, 33) besitzt, wobei mindestens ein zweiter elektrischer Anschluß (33) zum Bereitstellen der Zündspannung mit einer Elektrode (13) der Hochdruckentladungslampe (1) verbunden ist.

7. Beleuchtungssystem nach Anspruch 6, **dadurch gekennzeichnet, dass** die Elektrode (13) eine Zündhilfselektrode ist.

8. Beleuchtungssystem nach Anspruch 6, **dadurch gekennzeichnet, dass** das Beleuchtungssystem einen Schwingkreis (34) aufweist, dessen Spannungseingang mit dem Spannungsausgang (21, 22) der Betriebsschaltung (2) verbunden ist und dessen Spannungsausgang mit den ersten Anschlüssen (31, 32) verbunden ist wobei die Resonanzfrequenz des Schwingkreises (34) auf eine Resonanzfrequenz des piezoelektrischen Transformators (3) abgestimmt ist.
